Europäisches Patentamt

European Patent Office

Office européen des brevets

(19)

(11) Publication number: **0 068 079**

**B1**

(12) EUROPEAN PATENT SPECIFICATION

(45) Date of publication of patent specification: 22.06.88     (51) Int. Cl.⁴: **G 11 B 5/127,** G 11 B 5/10

(21) Application number: **82102512.9**

(22) Date of filing: **25.03.82**

(54) **Magnetic head assembly and method of assembly.**

(30) Priority: **30.06.81 US 278956**

(43) Date of publication of application:
**05.01.83 Bulletin 83/01**

(45) Publication of the grant of the patent:
**22.06.88 Bulletin 88/25**

(84) Designated Contracting States:
**DE FR GB IT NL**

(56) References cited:
**DE-B-1 227 941**
**DE-B-1 801 915**
**US-A-3 005 879**
**US-A-3 484 565**

**"Soviet Inventions Illustrated", Week C11, 23
April 1980, Section R34 & SU-A-672648**

(73) Proprietor: **International Business Machines
Corporation
Old Orchard Road
Armonk, N.Y. 10504 (US)**

(72) Inventor: **Argumedo, Armando Jesus
9511 E. 5th Street
Tucson Arizona 85710 (US)**
Inventor: **Chow, William Wai-Chung
1440 Sumatra Place
Tucson Arizona 85710 (US)**
Inventor: **Freeman, Robert David
4439 So. 1800 West
Roy Utah 84067 (US)**
Inventor: **Kleczkowski, Stawomir Peter
2571 So. 1825 East
Ogden Utah 84401 (US)**

(74) Representative: **Gasslander, Sten et al
IBM Svenska AB Box 962
S-181 09 Lidingö (SE)**

**EP 0 068 079 B1**

Courier Press, Leamington Spa, England.

## Description

This invention relates to magnetic head assemblies.

Some type of magnetic heads employ separate read and write modules in which ferrite is used as the pole pieces or substrate. The ferrite modules are mounted within a housing, which may be made of aluminium or another non-magnetic material. A significant problem that is experienced with such head assemblies is that as a result of the differences of the coefficient of thermal expansion of the ferrite modules and housing materials, changes in ambient temperature cause dimensional fluctuations with resultant misalignment of the magnetic head parts, including the read and write transducing gaps. If the read and write modules comprise multi-track heads having a multiplicity of aligned transducing gaps, the problem is more critical.

One of the solutions that has been offered includes the matching of the ferrite material with the materials of the housing, so that the values of the thermal coefficients of expansion are similar or close. An optimum material for this purpose is titanium for use in a housing wherein ferrite modules are employed. However, titanium is very difficult to machine and relatively expensive. Other solutions that have been offered to solve this problem are complex and costly, and are not totally effective, especially for those multi-track heads that are made relatively small and have closely spaced transducing gaps.

A magnetic head assembly is known from SU—A—672 648 comprising head module means mounted within a housing of integral, one-piece construction having two opposing walls, and a leaf spring disposed between one of said opposing walls and the head module means to fasten the head module means to the housing for precise alignment of the head module means relative to the housing. Although not expressly stated, it is to be expected that the spring and housing are of nonmagnetic materials, with the housing having a different coefficient of thermal expansion from that of the head module means, and that the spring would accommodate changes in the spacing between the head module means and the housing caused by changes in temperature.

An object of this invention is to provide a magnetic head assembly wherein thermal mismatch problems are minimized.

Another object of this invention is to provide a method of assembly wherein precise positioning of magnetic head modules is achieved magnetically and insertion of the leaf spring means simplified.

The invention is defined by the appended claims; and how it can be carried into effect is hereinafter particularly described with reference to the accompanying drawings, in which:

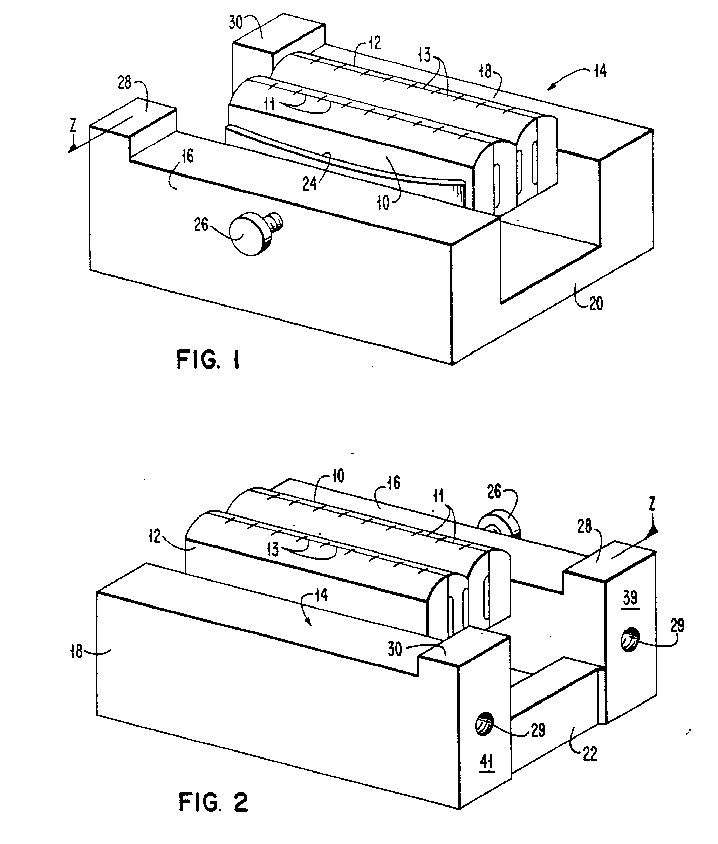

FIGURE 1 is an isometric top front view of a magnetic head assembly according to this invention;

FIGURE 2 is an isometric top rear view of the magnetic head assembly of Fig. 1;

FIGURE 3 is a front elevational view of the magnetic head assembly of Fig. 1;

FIGURE 4 is a side view of an assembly tool used for assembling the magnetic head; and

FIGURE 5 is an isometric view of the assembly tool, illustrated in Fig. 4.

A magnetic head assembly includes a ferrite write module 10 and a ferrite read module 12, which are positioned within an integral one piece housing 14 made of non-magnetic material, for example aluminium. The modules 10 and 12 have a multiplicity of discrete transducing gaps 11 and 13, respectively, disposed in alignment along a face of the module. The housing 14 is formed with two opposing walls 16 and 18, with connecting portions 20 and 22. The read module 12 is located within the channel formed between the walls 16 and 18, against the inner surface of wall 18. The write module 10 is located alongside the read module 12 and is urged into abutting relationship therewith by a curvilinear non-magnetic leaf spring 24, preferably made of beryllium copper. The spring 24 is located between the write module 10 and the inner surface of the wall 16. The tension of the leaf spring 24 may be varied by an adjustable screw 26 engaged and rotatable in a threaded aperture through the wall 16. The screw 26 bears on the centre of a convex surface of the leaf spring 24, which may be spaced less than 2.54 mm (0.1 in) from the inner surface of the adjacent wall 16.

The nonmagnetic leaf spring 24 provides a thermal compensating element between the aluminium housing 14 and the ferrite modules 10 and 12 to compensate for the thermal mismatch between the ferrite and aluminium and the resultant stress fluctuation. A precisely controlled clamping force, of about 907 g (20 lbs), by way of example, is provided by the leaf spring and single adjusting screw. The variation of clamping force over a large range of temperature is minimal. By means of this simple and inexpensive arrangement, a precise alignment of the ferrite modules relative to the aluminium housing can be maintained over a large temperature range. The configuration disclosed herein allows materials with different thermal expansion characteristics to be used in highly constrained configurations without the problems which would otherwise be experienced as a result of thermal mismatch.

The walls 16 and 18 have upstanding end flanges with aligned upper surfaces 28 and 30, respectively, to provide a datum surface Z. The adjacent end surfaces 39 and 41 of the walls 16 and 18, respectively, are aligned to provide a datum surface Y. In the surfaces 39 and 41 are blind mounting screw holes 29.

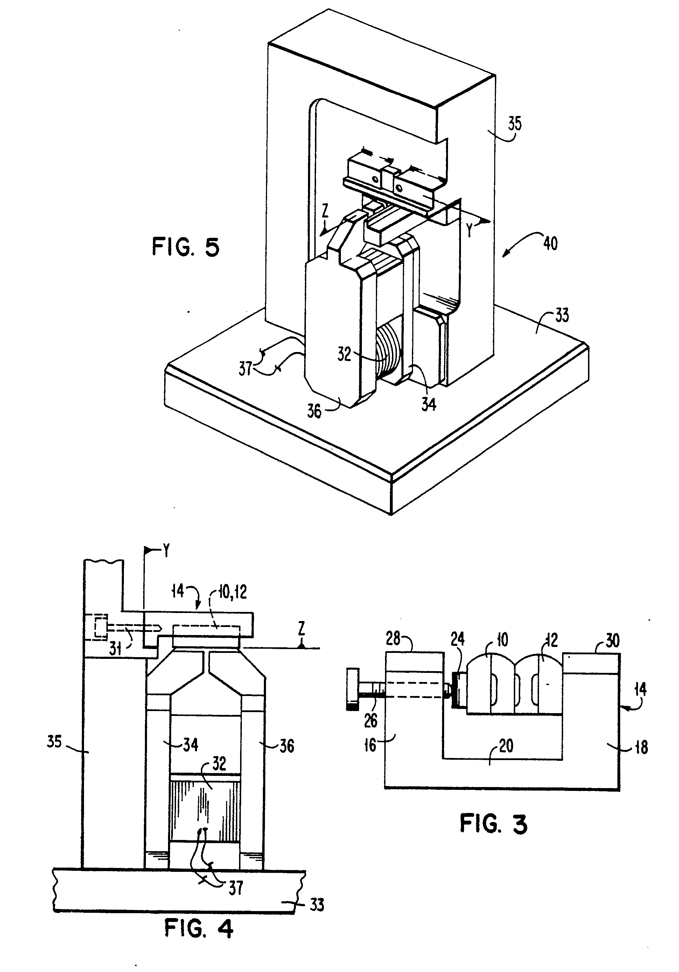

To effect assembly of the read and write modules clamped by the leaf spring in an aligned fixed position, an assembly tool 40 (Figs. 4 and 5) is used. The assembly tool sits on a stationary base 33 and has a vertical supporting structure 35. The tool incorporates an electromagnet having a coil 32 positioned between magnetic posts 34 and 36.

The housing 14 is mounted on the tool 40 by two holding screws 31 (Fig. 5) which enter the screw holes 29 (Fig. 2) through the structure 35, so that the housing upper surfaces 28 and 30 rest on a ledge forming a datum surface Z and the housing end surfaces 39 and 41 are seated against a face forming a Y datum of the tool 40. The tops of the posts 34 and 36 are aligned with the Z datum surface.

During assembly, the write and read ferrite modules 10 and 12 are inserted into the aluminium housing 14, lowered onto the tops of the post 34 and 36 so that the Z datum surface is tangent to the apices of the modules, positioned side-by-side against the wall 18 of the housing, and current from a power supply 37 to the coil 32 is turned on. As a result, the modules are urged against the inner surface of the housing wall 18 and against each other and are held in position by the magnetic force of the electromagnet. The modules are effectively aligned relative to the cooperating datum surfaces Y and Z formed in the housing 14 and in the magnetic tool 40.

With the read module 12 being held against the housing wall 18, and the write module being held in alignment against the read module by means of the applied magnetic force, the nonmagnetic leaf spring 24 is inserted into the small open space between the opposing housing wall 16 and the write module. The screw 26 is then adjusted to engage the convex surface of the spring 24, whose shape is controlled by means of the adjustable screw 26 and the force of clamping adjusted to a predetermined value.

The screw 26 bears against the leaf spring and varies the curvilinear geometry of the spring to exert more or less force against the write module, as desired. In the preferred embodiment, a force of about 907 g (20 pounds) is applied as the clamping force to maintain the head modules in fixed position within the housing.

By virtue of this invention, effective compensation for thermal mismatch is realized so that read and write gaps of associated multi-track read and write elements remain accurately aligned. A relatively high constant clamping pressure, which is adjustable, is applied in a simple and inexpensive manner to maintain the read and write modules in fixed position.

**Claims**

1. A magnetic head assembly comprising head module means (10, 12) mounted within a housing (14) of nonmagnetic material, the head module means and housing being of materials having different coefficients of thermal expansion, the housing being of integral, one-piece construction having two opposing walls (16, 18), and a non-magnetic, thermally compensating leaf spring (24) disposed between one wall (16) of the housing and the head module means to fasten the latter to the housing for precise alignment of the head module means relative to the housing, characterized in that the head module means is of magnetic material, the leaf spring provides thermal compensation in the sense that it maintains an essentially constant clamping force exerted by the spring, and in that adjusting screw means (26) are provided for adjusting said clamping force.

2. An assembly according to claim 1, in which the nonmagnetic material is aluminium and the magnetic material is ferrite.

3. An assembly according to claim 1 or 2, in which the head module means comprises separate read and write ferrite modules positioned adjacent to each other.

4. An assembly according to claim 3, in which each ferrite module includes a multiplicity of transducing gaps disposed in a collinear array.

5. An assembly according to any preceding claim, in which the leaf spring is formed from beryllium copper.

6. An assembly according to any preceding claim, including datum surfaces formed on the housing for enabling accurate assembly.

7. A method of assembling a magnetic head assembly according to any preceding claim comprising the steps of:

securing the housing to an assembly tool (40) with a datum surface aligned relative to the top of an electromagnet (32, 34, 36),

inserting the head module means (10, 12) into the housing (14),

energizing the electromagnet to magnetically urge the head module means against the inner surface of said opposing wall (18) of the housing,

inserting the leaf spring (24) into the space between the head module means, held against said opposing wall, and said one wall (16) of the housing and

adjusting the clamping force of the leaf spring by means of said adjusting screw means (26) to a predetermined value to maintain the precise alignment of the head module means relative to the housing.

**Patentansprüche**

1. Magnetkopfaufbau mit Kopfmodulmitteln (10, 12), welche in einem Gehäuse (14) aus nichtmagnetischem Material angebracht sind, wobei die Kopfmodulmittel und das Gehäuse aus Materialien mit unterschiedlichen Wärmeausdehnungskoeffizienten sind, wobei das Gehäuse ein einstückiger Aufbau mit zwei gegenüberstehenden Wänden (16, 18) ist, und einer nichtmagnetischen, thermisch kompensierenden Blattfeder (24), welche zwischen der einen Wand (16) des Gehäuses und den Kopfmodulmitteln zur Festlegung der letzteren am Gehäuse für eine exakte Ausrichtung der Kopfmodulmittel in Bezug auf das Gehäuse angeordnet ist, dadurch gekennzeichnet, daß die Kopfmodulmittel aus magnetischem Material sind, die Blattfeder eine thermique Kompensation in dem Sinne liefert, daß sie

3

eine im wesentlichen konstante durch die Feder ausgeübte Klemmkraft aufrechterhält und daß Justierschraubenmittel (26) zur Einstellung der Klemmkraft vorgesehen sind.

2. Aufbau nach Anspruch 1, bei welchem das nichtmagnetische Material Aluminium und das magnetische Material Ferrit ist.

3. Aufbau nach Anspruch 1 oder 2, bei welchem die Kopfmodulmittel getrennte Lese- und Schreib-Ferritmoduln, die aneinander angrenzend angeordnet sind, umfassen.

4. Aufbau nach Anspruch 3, bei welchem jeder Ferritmodul eine Mehrzahl von Wandlerspalten aufweist, die in kollinearer Anordnung angeordnet sind.

5. Aufbau nach irgendeinem vorstehenden Anspruch, bei welchem die Blattfeder aus Berylliumkupfer ausgebildet ist.

6. Aufbau nach irgendeinem vorstehenden Anspruch, welcher auf dem Gehäuse ausgebildete Bezugsflächen zur Ermöglichung einer genauen Montage enthält.

7. Verfahren zum Montieren eines Magnetkopfaufbaus nach irgendeinem vorstehenden Anspruch, mit den Verfahrensschritten des

Befestigens des Gehäuses an einem Montagewerkzeug (40) so, daß eine Bezugsfläche auf das obere Ende eines Elektromagneten (32, 34, 36) ausgerichtet ist,

Einsetzens der Kopfmodulmittel (10, 12) in das Gehäuse (14),

Erregens des Elektromagneten, um so die Kopfmodulmittel gegen die Innenfläche der gegenüberstehenden Wand (18) des Gehäuses zu drücken,

Einsetzens der Blattfeder (24) in den Raum zwischen den gegen die gegenüberstehende Wand gehaltenen Kopfmodulmitteln und der einen Wand (16) des Gehäuses, und

Einstellens der Klemmkraft der Blattfeder mittels der Justierschraubenmittel (26) auf einen bestimmten Wert zur Aufrechterhaltung der exakten Ausrichtung der Kopfmodulmittel in Bezug auf das Gehäuse.

**Revendications**

1. Tête magnétique comprenant un ensemble-module de tête (10, 12) monté à l'intérieur d'un boîtier (14) en matériau non magnétique, cet ensemble-module de tête et ce boîtier étant en des matériaux offrant des coefficients différents de dilatation thermique, le boîtier offrant une structure monobloc en une seule pièce comportant deux parois en regard (16, 18), et un ressort à lame, non magnétique, de compensation thermique (24) disposé entre l'une (16) des parois du boîtier et l'ensemble-module de tête de façon à immobiliser ce dernier par rapport au boîtier en vue d'un alignement précis de cet ensemble-module de tête par rapport à ce boîtier, caractérisée en ce que l'ensemble-module de tête est en un matériau magnétique, le ressort à lame fournit une compensation thermique du fait qu'il maintient une force de serrage essentiellement constante exercée par ce ressort, et en ce qu'il est prévu une vis de réglage (26) pour régler ladite force de serrage.

2. Tête magnétique suivant la revendication 1, dans laquelle le matériau non magnétique est de l'aluminium et le matériau magnétique est de la ferrite.

3. Tête magnétique suivant la revendication 1 ou 2 dans laquelle l'ensemble-module de tête comprend des modules d'écriture et d'enregistrement en ferrite distincts et disposés de façon adjacente l'un à l'autre.

4. Tête magnétique suivant la revendication 3, dans laquelle chaque module en ferrite comprend de multiples fentes de transducteur disposées suivant un agencement colinéaire.

5. Tête magnétique suivant n'importe quelle revendication précédente, dans laquelle le ressort à lame est réalisé en cuivre au béryllium.

6. Tête magnétique suivant n'importe quelle revendication précédente, comporte des surfaces de référence ménagées sur le boîtier afin de permettre un assemblage précis.

7. Procédé d'assemblage d'une tête magnétique suivant n'importe quelle revendication précédente, consistant:

à fixer le boîtier sur un outillage d'assemblage (40) avec une surface de référence alignée par rapport à l'extrémité supérieure d'un électroaimant (32, 34, 36),

à introduire l'ensemble-module de tête (10, 12) dans le boîtier (14),

à mettre l'électroaimant sous tension de façon à repousser magnétiquement l'ensemble-module de tête contre la surface intérieure de ladite paroi opposé (18) du boîtier,

à introduire le ressort à lame (24) dans l'espace situé entre l'ensemble-module de tête, maintenu contre ladite paroi opposée, et ladite première paroi (16) du boîtier et

à ajuster la force de serrage du ressort à lame, à l'aide de la vis de réglage (26) à une valeur préfixée de façon à maintenir l'alignement précis de l'ensemble-module de tête par rapport au boîtier.

FIG. 1

FIG. 2

FIG. 5

FIG. 4

FIG. 3